# EUROPEAN PATENT SPECIFICATION

(11) **EP 3 978 652 B1**
(45) Date of publication and mention of the grant of the patent: **22.01.2025**
(21) Application number: 20814181.2
(22) Date of filing: 11.05.2020
(51) Int. Cl.: C25B 9/23, C25B 1/042, C25B 9/70, C25B 9/75, C25B 9/77, C25B 15/02, H01M 4/90, C25B 15/08, H01M 8/12, H01M 8/1253

(54) **ELECTROCHEMICAL CELL AND HYDROGEN GENERATION METHOD**
ELEKTROCHEMISCHE ZELLE UND VERFAHREN ZUR ERZEUGUNG VON WASSERSTOFF
CELLULE ÉLECTROCHIMIQUE ET PROCÉDÉ DE GÉNÉRATION D'HYDROGÈNE

(30) Priority: 27.05.2019 JP 2019098695
(43) Date of publication of application: 06.04.2022
(73) Proprietor: Panasonic Intellectual Property Management Co., Ltd., Osaka-shi, Osaka 540-6207 (JP)
(72) Inventor: GOTO, Takehito, Osaka (JP); KUROHA, Tomohiro, Osaka (JP); KAKUWA, Takashi, Osaka (JP); TERAYAMA, Takeshi, Osaka (JP); ONUMA, Shigenori, Osaka (JP); MIKAMI, Yuichi, Osaka (JP); NUNOO, Kosuke, Osaka (JP); KAWADA, Kyohei, Osaka (JP)
(74) Representative: Grünecker Patent- und Rechtsanwälte PartG mbB
(86) International application number: PCT/JP2020/018754
(87) International publication number: WO 2020/241211

(56) References cited:
- JP-A- 2008 533 678
- JP-A- 2010 176 939
- JP-A- 2014 503 689
- JP-A- H01 100 868
- JP-A- H01 100 868
- US-A1- 2008 213 639
- US-A1- 2011 151 349
- US-A1- 2013 284 591

## Description

The present disclosure relates to an electrochemical cell and a hydrogen generation method, see claims 1 and 13 respectively.

### Background Art

As a method for producing hydrogen by using electrolysis, high-temperature water vapor electrolysis that uses a solid oxide electrolysis cell (SOEC) is known. In high-temperature water vapor electrolysis, thermal energy is used as energy necessary for the electrolysis reaction, and, accordingly, a high conversion efficiency can be achieved. As an electrolyte for the solid oxide electrolysis cell, an oxide ion conductor, such as yttria-stabilized zirconia, is used.

In high-temperature water vapor electrolysis, water vapor is supplied to a hydrogen electrode, and the water vapor is decomposed into hydrogen and oxide ions. The oxide ions migrate through the electrolyte layer to reach an oxygen electrode, and the oxide ions become oxygen at the oxygen electrode. A gas mixture of the generated hydrogen and the residual water vapor is discharged from the hydrogen electrode.

From the standpoint of use of the hydrogen, it is desirable that the purity of the generated hydrogen be increased. Patent Literature 1 describes an electrical power storage system configured such that the gas mixture of hydrogen and water vapor is passed through a condenser to remove water, and subsequently, the hydrogen is compressed and stored in a hydrogen storage tank.

### Citation List

### Patent Literature

PTL 1: Japanese Unexamined Patent Application Publication No. 2010-176939

### Summary of Invention

### Technical Problem

In the system described in Patent Literature 1, an electrochemical cell and the condenser are completely separated and connected to each other with a conduit. Such a configuration renders miniaturization of a system difficult.

The present invention provides a technology for facilitating miniaturization of a system.

### Solution to Problem

The present invention provides an electrochemical cell as defined in claim 1, and a method of generating hydrogen as defined in claim 13. U

Further preferred embodiments of the present invention are defined in the dependent claims.

### Advantageous Effects of Invention

An electrochemical cell of the present disclosure facilitates miniaturization of systems that use the electrochemical cell.

### Brief Description of Drawings

[Fig. 1A] Fig. 1A is a perspective view of an electrochemical cell.
[Fig. 1B] Fig. 1B is a cross-sectional view of the electrochemical cell as shown in figure 1A.
[Fig. 2] Fig. 2 is a cross-sectional view of an electrochemical cell according to the present invention.
[Fig. 3] Fig. 3 is a cross-sectional view of another arr electrochemical cell according to the present invention.
[Fig. 4A] Fig. 4A is a perspective view of a further arr electrochemical cell according to the present invention.
[Fig. 4B] Fig. 4B is a cross-sectional view of the electrochemical cell as shown in Figure 4A.
[Fig. 5] Fig. 5 is a cross-sectional view of another electrochemical cell.
[Fig. 6] Fig. 6 is a cross-sectional view of an electrochemical cell.
[Fig. 7] Fig. 7 is a cross-sectional view of an electrochemical cell.

### Description of Embodiments

### (Underlying Knowledge Forming Basis of the Present Disclosure)

The present inventors diligently performed studies regarding technologies for separating hydrogen from the gas mixture. As a result, the present inventors discovered that highly concentrated hydrogen can be obtained by using a proton conductor. It was discovered that combining the hydrogen separation that uses a proton conductor with an SOEC enables highly concentrated hydrogen to be generated without relying on a condenser.

The electrochemical cell according to the present invention, and defined in claim 1, facilitates miniaturization of systems that use the electrochemical cell.

This configuration enables hydrogen generated in the first cell to be easily directed to the second cell.

Embodiments of the present disclosure will now be described with reference to the drawings. The present disclosure is not limited to the embodiments described below.

### (First Embodiment not covered by the present invention)

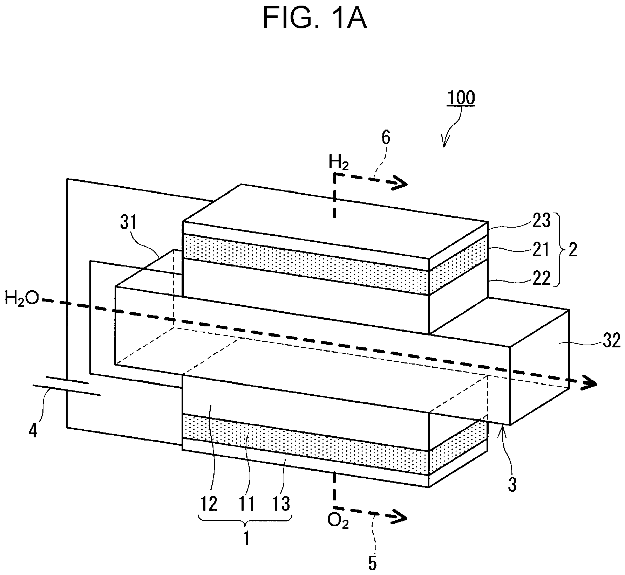

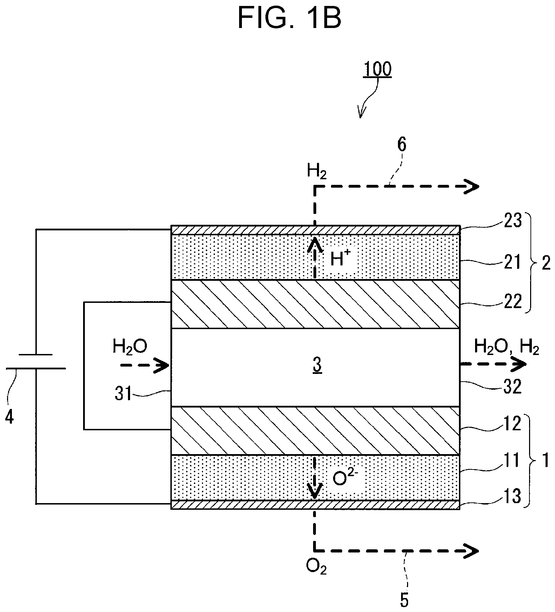

Fig. 1A illustrates, in perspective view, a configuration of an electrochemical cell 100. Fig. 1B illustrates a cross section of the electrochemical cell 100 illustrated in Fig. 1A. The electrochemical cell 100 includes a first cell 1 and a second cell 2. The second cell 2 is disposed to face the first cell 1.

The first cell 1 is formed of a first electrolyte layer 11, a first electrode 12, and a second electrode 13. The first electrolyte layer 11 is disposed between the first electrode 12 and the second electrode 13. The first electrolyte layer 11 includes an oxide ion conductor that serves as an electrolyte.

The second cell 2 is formed of a second electrolyte layer 21, a third electrode 22, and a fourth electrode 23. The second electrolyte layer 21 is disposed between the third electrode 22 and the fourth electrode 23. The second electrolyte layer 21 includes a proton conductor that serves as an electrolyte.

Here, the first cell 1 and the second cell 2 both have a plate shape and are arranged to be parallel to each other with a predetermined space therebetween.

In the electrochemical cell 100, the first cell 1 plays a role different from the role of the second cell 2. The first cell 1 generates hydrogen and oxygen by decomposing water vapor. This process is high-temperature water vapor electrolysis that uses an SOEC. The second cell 2 selectively separates the hydrogen from a gas mixture of the hydrogen generated in the first cell 1 and the water vapor which has not been decomposed in the first cell 1, by using the function of the proton conductor. Accordingly, highly concentrated hydrogen can be produced. Since the first cell 1 and the second cell 2 face each other, the hydrogen generated in the first cell 1 easily reaches the second cell 2 and is immediately processed by the second cell 2.

The electrochemical cell 100 enables the generation of highly concentrated hydrogen without requiring the use of a condenser for removing water vapor from the gas mixture. That is, the electrochemical cell 100 facilitates miniaturization of a hydrogen generation system. Of course, the electrochemical cell 100 can be used in combination with a condenser. In this case, miniaturization of the system can be expected to be achieved by reducing a size of the condenser.

In this specification, the terms "hydrogen" and "oxygen" refer to "hydrogen gas" and "oxygen gas", respectively, unless otherwise specified.

Regarding the first cell 1, examples of the oxide ion conductor that is used in the first electrolyte layer 11 include stabilized zirconia, lanthanum gallate-based oxides, and ceria-based oxides. Typically, the first electrolyte layer 11 is formed of yttria-stabilized zirconia (YSZ).

The first electrode 12 includes a catalyst for promoting an electrochemical oxidation reaction of the water vapor. The catalyst may be a metal, such as Ni. The first electrode 12 may be made of a cermet. The cermet is a mixture of a metal and a ceramic material. Examples of the cermet include Ni-YSZ and a mixture of Ni and a ceria-based oxide. In instances where the first electrode 12 is formed of a cermet, an expected effect is an increase in the reactive active sites for oxidizing water vapor. The first electrode 12 may be a porous body so as to facilitate the diffusion of water vapor.

The second electrode 13 includes a catalyst for promoting an electrochemical oxidation reaction of oxide ions. The catalyst may be an oxide containing at least one selected from the group consisting of Mn, Fe, Co, and Ni. Specific examples of the catalyst include lanthanum strontium cobalt iron complex oxide (LSCF), lanthanum strontium cobalt complex oxide (LSC), lanthanum strontium iron complex oxide (LSF), lanthanum strontium manganese complex oxide (LSM), barium strontium cobalt iron complex oxide (BSCF), samarium strontium cobalt complex oxide (SSC), lanthanum nickel iron complex oxide, lanthanum nickel complex oxide, and barium gadolinium lanthanum cobalt complex oxide. The catalyst may be a composite of a first oxide and a second oxide or a composite of the first oxide and a metal. The first oxide contains at least one selected from the group consisting of Mn, Fe, Co, and Ni. The second electrode 13 may be a porous body so as to facilitate the diffusion of the generated oxygen.

Regarding the second cell 2, examples of the proton conductor that is used in the second electrolyte layer 21 include proton-conducting oxides. Specifically, the proton conductor that is included in the second electrolyte layer 21 may be at least one selected from the group consisting of BaZr₁₋ₓ₁M1ₓ₁O_{3-δ}, BaCe₁₋ₓ₂M2ₓ₂O_{3-δ}, and BaZr_{1-x3-y3}Ceₓ₃M3_{y3}O_{3-δ}. M1, M2, and M3 may each include at least one selected from the group consisting of Pr, Nd, Pm, Sm, Eu, Gd, Tb, Dy, Ho, Er, Tm, Yb, Y, Sc, In, and Lu. x1 satisfies 0 < x1 < 1. x2 satisfies 0 < x2 < 1. x3 satisfies 0 < x3 < 1. y3 satisfies 0 < y3 < 1. The value of δ satisfies 0 < δ < 0.5. These proton conductors have high proton conductivity. Using a solid electrolyte having high proton conductivity improves the electrochemical performance of the second cell 2. The proton conductor may be made of BaZr₁₋ₓ₁Ybₓ₁O_{3-δ}. BaZr₁₋ₓ₁Ybₓ₁O_{3-δ} has high proton conductivity. The variable δ is a value by which an amount of oxygen deficiency in the crystal lattice of the oxide is indicated on the composition. The value of δ varies depending on the value of x1, the value of x2, the value of x3, the value of y3, a temperature, an oxygen partial pressure, a water vapor partial pressure, and the like. The second electrolyte layer 21 may be a dense body.

The third electrode 22 includes a catalyst for electrochemically oxidizing hydrogen. The catalyst may be a metal, such as Ni. The third electrode 22 may be formed of a cermet. The cermet may be a mixture of Ni and a proton-conducting oxide, and examples of the mixture include a mixture of Ni and BaZr₁₋ₓ₁Ybₓ₁O_{3-δ}. In instances where the third electrode 22 is formed of a cermet, an expected effect is an increase in the reactive active sites for oxidizing hydrogen. The third electrode 22 may be a porous body so as to facilitate the diffusion of hydrogen and water vapor.

The fourth electrode 23 includes a catalyst for electrochemically reducing protons. The catalyst may be a metal, such as Ni. The fourth electrode 23 may be formed of a cermet. The cermet may be a mixture of Ni and a proton-conducting oxide, and examples of the mixture include a mixture of Ni and BaZr₁₋ₓ₁Ybₓ₁O_{3-δ}. In instances where the fourth electrode 23 is formed of a cermet, an expected effect is an increase in the reactive active sites for reducing protons. The fourth electrode 23 may be a porous body so as to facilitate the diffusion of hydrogen.

The "porous body" or a "porous" refers to a material having a porosity of greater than or equal to 20%, for example. The porosity can be measured by using an Archimedes method or a mercury intrusion porosimetry method.

The electrochemical cell 100 further includes a gas path 3. The gas path 3 is provided between the first cell 1 and the second cell 2. The first cell 1 and the second cell 2 face each other across the gas path 3. This configuration enables the hydrogen generated in the first cell 1 to be easily directed to the second cell 2. The water vapor electrolysis in the first cell 1 and the hydrogen separation in the second cell 2 proceed smoothly.

The first cell 1 and the second cell 2 face the gas path 3. Specifically, the first electrode 12 of the first cell 1 and the third electrode 22 of the second cell 2 face the gas path 3. The first electrode 12 and the third electrode 22 face each other. In other words, at least a part of an inner wall surface of the gas path 3 is composed of the first electrode 12 and the third electrode 22. This configuration enables the water vapor present in the gas path 3 to be rapidly processed in the first electrode 12 and enables the hydrogen present in the gas path 3 to be rapidly processed in the third electrode 22.

The gas path 3 may be a space between the first cell 1 and the second cell 2. For example, in an instance where the first cell 1 and the second cell 2 have a cylindrical shape and are disposed concentrically, the space between the first cell 1 and the second cell 2 composes the gas path 3. Alternatively, a different member, other than the first cell 1 or the second cell 2, may constitute the gas path 3. The different member may be a metal conduit. The first cell 1 and the second cell 2 may be mounted to the metal conduit such that the first cell 1 and the second cell 2 face an inner part of the metal conduit.

The gas path 3 includes an inlet 31 and an outlet 32. Water vapor, which is the raw material for the water vapor electrolysis, is fed to the electrochemical cell 100 through the inlet 31. Unreacted hydrogen and unreacted water vapor are discharged from the electrochemical cell 100 through the outlet 32.

Note that the electrochemical cell 100 may include a connection structure so that the gas path 3 can be ensured, that is, a configuration in which the first cell 1 is separated from the second cell 2 can be provided. For example, the connection structure is provided at each of four corners of the first cell 1 and the second cell 2. The connection structure holds the first cell 1 and the second cell 2 in a manner such that the first electrode 12 of the first cell 1 is separated from the third electrode 22 of the second cell 2.

The electrochemical cell 100 further includes an oxygen passage 5 and a hydrogen passage 6. The oxygen passage 5 is a passage through which oxygen generated in the first cell 1 flows. The oxygen passage 5 is connected to the first cell 1. Specifically, the oxygen passage 5 is connected to the second electrode 13 of the first cell 1. A terminal end of the oxygen passage 5 is connected to, for example, oxygen storage equipment. The hydrogen passage 6 is a passage through which hydrogen separated in the second cell 2 flows. The hydrogen passage 6 is connected to the second cell 2. Specifically, the hydrogen passage 6 is connected to the fourth electrode 23 of the second cell 2. A terminal end of the hydrogen passage 6 is connected to, for example, hydrogen storage equipment. The oxygen passage 5 and the hydrogen passage 6 may be composed of a heat-resistant conduit, which may be, for example, a metal conduit.

The electrochemical cell 100 further includes a power source 4. The power source 4 supplies power to the first cell 1 and the second cell 2. In the present embodiment, the power source 4 is shared by the first cell 1 and the second cell 2. The power source 4 is connected to the second electrode 13 of the first cell 1 and to the fourth electrode 23 of the second cell 2. The first electrode 12 of the first cell 1 is electrically connected to the third electrode 22 of the second cell 2. That is, the first cell 1 is connected to the second cell 2 in series. The power source 4 enables reliable supply of necessary electrical energy to the first cell 1 and the second cell 2, thereby enabling efficient generation of highly concentrated hydrogen. The shared use of the power source 4 by the first cell 1 and the second cell 2 contributes to a cost reduction.

Now, operation of the electrochemical cell 100 will be described in detail. In the electrochemical cell 100, a step of generating hydrogen and oxygen by electrolyzing water vapor and a step of separating hydrogen from a gas mixture of hydrogen and water vapor proceed in parallel. The step of generating hydrogen and oxygen is carried out by using the first cell 1, which includes an oxide ion conductor that serves as an electrolyte. The step of separating hydrogen from a gas mixture is carried out by using the second cell 2, which includes a proton conductor that serves as an electrolyte. The gas mixture contains the hydrogen generated in the first cell 1 and the water vapor which has not been decomposed in the first cell 1. Implementation of these steps enables efficient generation of highly concentrated hydrogen.

First, the power source 4 is turned on to supply water vapor to the gas path 3. When the water vapor reaches a surface of the first cell 1, the water vapor is reduced to hydrogen and oxide ions at the first electrode 12. Specifically, the water vapor is reduced to hydrogen and oxide ions at or near an interface between the first electrolyte layer 11 and the first electrode 12. The oxide ions migrate through the first electrolyte layer 11 to reach the second electrode 13. At the second electrode 13, an oxidation reaction of the oxide ions occurs, which generates oxygen. Specifically, the oxide ions are oxidized and converted to oxygen at or near an interface between the first electrolyte layer 11 and the second electrode 13. The oxygen is discharged from the second electrode 13 and directed to the outside of the electrochemical cell 100 through the oxygen passage 5.

The hydrogen generated at the surface of the first cell 1 diffuses through the gas path 3 to reach a surface of the second cell 2. When the hydrogen reaches the surface of the second cell 2, the hydrogen is oxidized and converted to protons at the third electrode 22. Specifically, the hydrogen is oxidized and converted to protons at or near an interface between the second electrolyte layer 21 and the third electrode 22. The protons migrate through the second electrolyte layer 21 to reach the fourth electrode 23. At the fourth electrode 23, a reduction reaction of the protons occurs, which generates hydrogen. Specifically, the protons are reduced and converted to hydrogen at or near an interface between the second electrolyte layer 21 and the fourth electrode 23. The hydrogen is directed to the outside of the electrochemical cell 100 through the hydrogen passage 6. Based on the reactions described above, only the hydrogen generated by the reaction at or near the interface between the second electrolyte layer 21 and the fourth electrode 23 is supplied to the outside of the electrochemical cell 100. Accordingly, highly concentrated hydrogen can be obtained.

A gas mixture of unreacted hydrogen and unreacted water vapor is discharged to the outside of the electrochemical cell 100 through the gas path 3.

The reaction at each of the electrodes is as follows.
First electrode 12: 2H₂O + 4e⁻ → 2H₂ + 2O²⁻
Second electrode 13: 2O²⁻ → O₂ + 4e⁻
Third electrode 22: H₂ → 2H⁺ + 2e⁻
Fourth electrode 23: 2H⁺ + 2e⁻ → H₂

During the operation of the electrochemical cell 100, an ambient temperature (i.e., an operating temperature) of the first cell 1 and the second cell 2 is maintained at greater than or equal to 500°C and less than or equal to 1000°C, for example. The operating temperature is specified based on an oxide ion conductivity of the oxide ion conductor included in the first electrolyte layer 11. For example, in an instance where yttria-stabilized zirconia is used in the first electrolyte layer 11, the operating temperature may be set to be greater than or equal to 700°C. The temperature at which the second electrolyte layer 21 exhibits sufficient proton conductivity is approximately 600°C, which is less than the temperature suitable for the first electrolyte layer 11. The first cell 1 and the second cell 2 may be stored in a thermally insulating housing.

Some additional embodiments will be described below. Elements of an embodiment that are common with those of the first embodiment are designated with the same reference numerals, and descriptions thereof may be omitted. Regarding the embodiments disclosed herein, the description of one embodiment may apply to another embodiment as long as there is no technical inconsistency. Any combination of the embodiments is possible as long as there is no technical inconsistency.

### (First Embodiment)

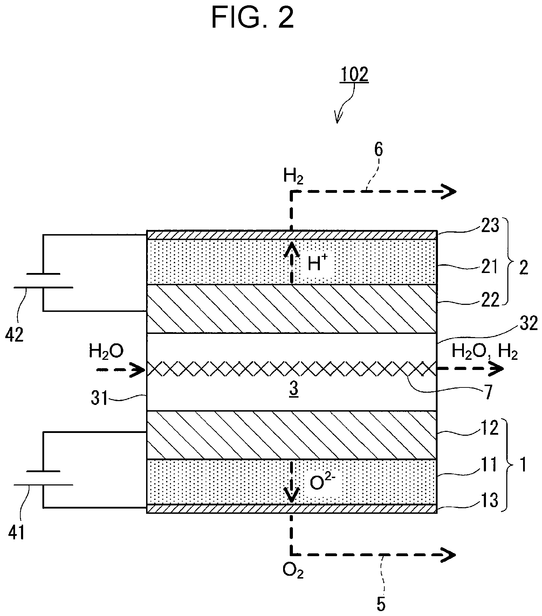

Fig. 2 illustrates a cross section of an electrochemical cell 102. The electrochemical cell 102 includes a first power source 41 and a second power source 42, instead of the power source 4. The first power source 41 supplies power to a first cell 1. The first power source 41 is connected to a first electrode 12 of the first cell 1 and to a second electrode 13 of the first cell 1. The second power source 42 supplies power to a second cell 2. The second power source 42 is connected to a third electrode 22 of the second cell 2 and to a fourth electrode 23 of the second cell 2.

In the instance of the power source 4, which has been described earlier, since the first cell 1 and the second cell 2 are connected to each other in series, currents with the same value flow through the first cell 1 and the second cell 2. However, the current value suitable for the water vapor electrolysis reaction in the first cell 1 may be different from the current value suitable for the electrochemical hydrogen separation in the second cell 2. The present embodiment enables separate control of the first power source 41 and the second power source 42. In this instance, an amount of power suitable for the first cell 1 and an amount of power suitable for the second cell 2 can be supplied, and, therefore, the electrochemical cell 102 has excellent control.

Here, and according to the present invention, the first cell 1 and the second cell 2 are electrically insulated from each other. The electrochemical cell 102 may further include an insulator layer 7 so that the first cell 1 and the second cell 2 can be reliably isolated from each other. The insulator layer 7 may be disposed between the first cell 1 and the second cell 2. The insulator layer 7 can be disposed in the gas path 3 such that, for example, the insulator layer 7 divides the gas path 3 along a gas flow direction. Example of a material of the insulator layer 7 include oxides, such as alumina, stabilized zirconia, and barium zirconate-based oxides. Another material that can be used as a material of the insulator layer 7 is a glass-based seal material.

### (Second Embodiment)

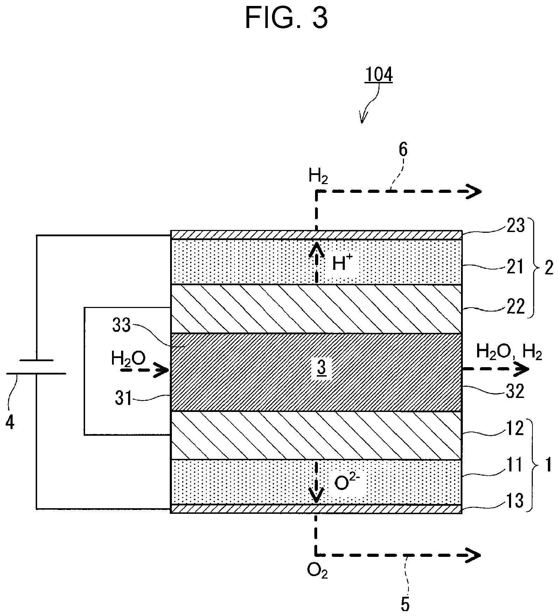

Fig. 3 illustrates a cross section of an electrochemical cell 104. The electrochemical cell 104 additionally includes a porous layer 33, which is disposed between a first cell 1 and a second cell 2. At least a part of a gas path 3 is composed of the porous layer 33. The porous layer 33 connects the first cell 1 to the second cell 2. The first cell 1 and the second cell 2 are secured to each other by the porous layer 33.

The porous layer 33 allows the water vapor and hydrogen necessary for the reactions to circulate through the gas path 3 between the first cell 1 and the second cell 2 while providing a connection between the first cell 1 and the second cell 2. The electrochemical cell 104 can be provided which, as a whole, efficiently contributes to the reactions while allowing the circulation of the water vapor supplied from the outside and the hydrogen generated at the first electrode 12.

Examples of a porous material that forms the porous layer 33 include porous ceramics, porous metal bodies, and metal meshes. For example, the porous layer 33 has a porosity of greater than or equal to 20%. Note that in an instance where the porous layer 33 is made of a metal, insulation may be provided to prevent shorting between the first electrode 12 and the third electrode 22 from occurring via the porous layer 33.

### (Third Embodiment)

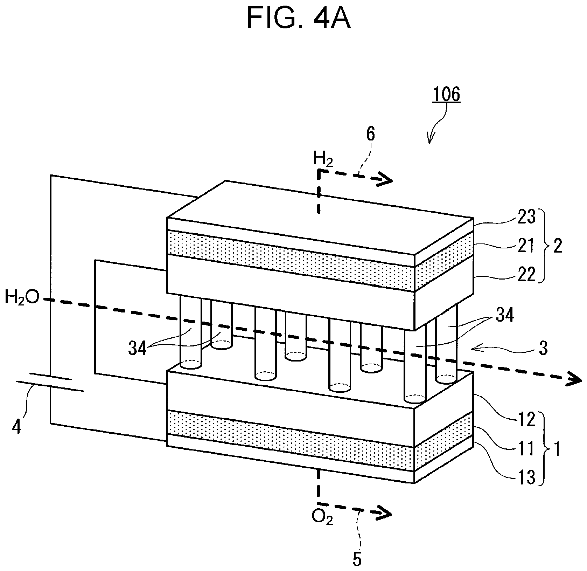

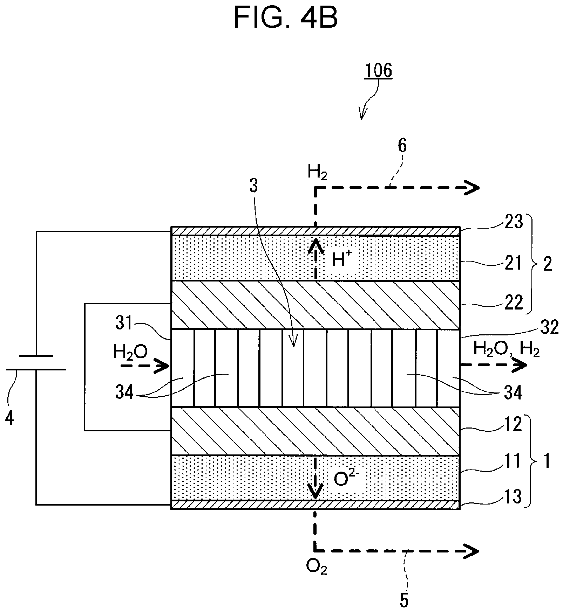

Fig. 4A illustrates, in perspective view, a configuration of an electrochemical cell 106. Fig. 4B illustrates a cross section of the electrochemical cell 106 illustrated in Fig. 4A. The electrochemical cell 106 additionally includes at least one support 34, which is disposed in the gas path 3. In the present embodiment, a plurality of supports 34 are provided. The supports 34 connect a first cell 1 to a second cell 2. The supports 34 secure the first cell 1 and the second cell 2 to each other.

The supports 34 allow the water vapor and hydrogen necessary for the reactions to circulate through the gas path 3 between the first cell 1 and the second cell 2 while providing a connection between the first cell 1 and the second cell 2. The electrochemical cell 106 can be provided which, as a whole, efficiently contributes to the reactions while allowing the circulation of the water vapor supplied from the outside and the hydrogen generated at the first electrode 12.

In the present embodiment, the supports 34 are regularly arranged. The supports 34 are spaced at equal intervals in a water vapor flow direction. However, the arrangement of the supports 34 is not particularly limited provided that the first cell 1 and the second cell 2 are stably secured to each other. The factors that determine the arrangement of the supports 34 include the number of the supports 34 and positions of the supports 34. For example, when both the first cell 1 and the second cell 2 have a rectangular parallelepiped shape, the support 34 may be provided at each of the four corners.

Examples of a material of the supports 34 include metals, ceramics, and cermets. Specific examples include Ni and Ni-containing cermets. Examples of the Ni-containing cermets include Ni-YSZ and Ni-BaZr₁₋ₓ₁Ybₓ₁O_{3-δ}. Note that in an instance where the supports 34 are made of a metal, insulation may be provided to prevent shorting between the first electrode 12 and the third electrode 22 from occurring via the supports 34.

### (Second Embodiment not covered by the present invention)

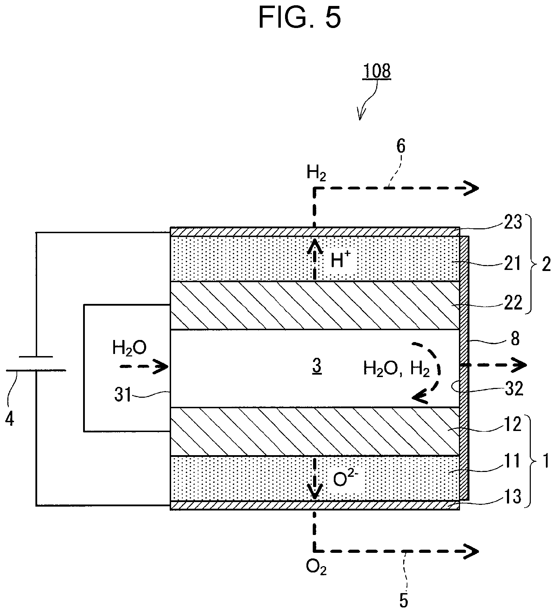

Fig. 5 illustrates a cross section of an electrochemical cell 108, according to a fifth embodiment of the present disclosure. In the electrochemical cell 108, a downstream end of a gas path 3 is closed. In other words, an outlet 32 of the gas path 3 is closed. In the instance where the gas path 3 is closed, the entirety of the supplied water vapor is used for the water vapor electrolysis reaction. That is, water vapor utilization efficiency can be maximized.

The electrochemical cell 108 additionally includes a seal member 8, which is a member for closing the gas path 3. The seal member 8 is provided on a downstream side of the gas path 3 with respect to a water vapor flow direction. The seal member 8 also serves to connect a first cell 1 to a second cell 2. In the present embodiment, the seal member 8 is attached to end surfaces of the first cell 1 and the second cell 2, which are downstream side surfaces with respect to the water vapor flow direction. Accordingly, outflow of the water vapor to the outside of the space (e.g., the gas path 3) between the first cell 1 and the second cell 2 is prevented.

Examples of a material of the seal member 8 include seal materials, such as thermiculite and crystalline glass.

Here, the seal member 8 has a plate shape and extends from a side surface of the first electrolyte layer 11 to a side surface of the second electrolyte layer 21 to connect the first cell 1 and the second cell 2 to each other. It should be noted that the structure for closing the downstream end of the gas path 3 is not particularly limited. For example, the seal member 8 may be present exclusively on a region from a side surface of the first electrode 12 to a side surface of the third electrode 22. The first electrode 12 may be connected to the third electrode 22 by the seal member 8.

Furthermore, the seal member 8 may be configured such that the downstream end of the gas path 3, that is, the outlet 32 of the gas path 3 can be opened and closed. For example, the seal member 8 may be provided with a gas discharge mechanism such as an on-off solenoid valve. In the instance where the outlet 32 of the gas path 3 is closed, impurities that do not contribute to the water vapor electrolysis reaction may accumulate in the gas path 3. By controlling the gas discharge mechanism to open the outlet 32 of the gas path 3, thereby removing impurities regularly or at a selected timing, it is possible to continue an efficient water vapor electrolysis reaction and continue efficient hydrogen separation.

### (Third Embodiment not covered by the present invention)

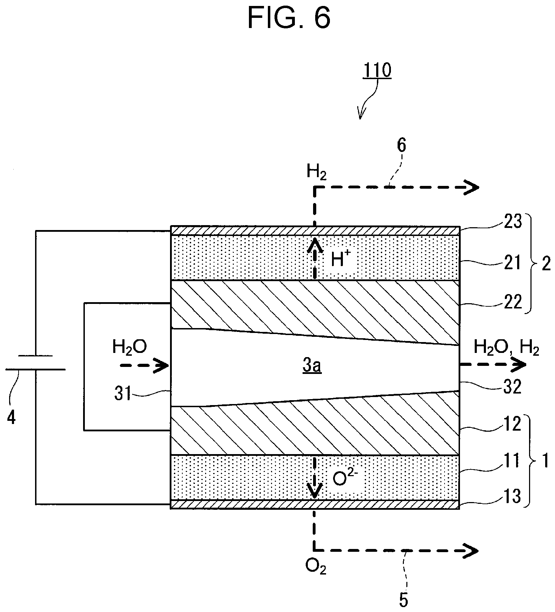

Fig. 6 illustrates a cross section of an electrochemical cell 110. In the electrochemical cell 110, a flow path cross-sectional area of a gas path 3 is larger at an upstream part of the gas path 3 than at a downstream part of the gas path 3. In other words, an open area of an inlet 31 of the gas path 3 is larger than an open area of an outlet 32 of the gas path 3. The flow path cross-sectional area of the gas path 3 continuously decreases in a water vapor flow direction. In other words, a distance between the first electrode 12 and the third electrode 22 continuously decreases in the water vapor flow direction. This configuration facilitates one-direction flow of the water vapor used in the reaction, from an upstream side toward a downstream side. This enables the water vapor electrolysis reaction to proceed efficiently.

Here, the above-described configuration is realized by configuring a thickness of at least one of the first electrode 12 or the third electrode 22 such that the thickness continuously increases from the upstream side of the gas path 3 toward the downstream side thereof. Note that even in instances where the flow path cross-sectional area of the gas path 3 decreases in a stepwise manner, the same effect can be produced, depending on a shape of the gas path 3.

The "open area of the inlet 31 of the gas path 3" refers to the flow path cross-sectional area of the gas path 3 at a position of an upstream end of a first cell 1 and a second cell 2. The "open area of the outlet 32 of the gas path 3" refers to the flow path cross-sectional area of the gas path 3 at a position of a downstream end of the first cell 1 and the second cell 2. The "position of an upstream end" refers to a position of the upstream end with respect to the water vapor flow direction. The "position of a downstream end" refers to a position of the downstream end with respect to the water vapor flow direction. Note that, in Fig. 6, the thickness of the first electrode 12 is varied, and the thickness of the third electrode 22 is varied. However, the thicknesses may not necessarily be varied. In other words, the thickness of the first electrode 12 may be uniform, and the thickness of the third electrode 22 may be uniform. For example, the first cell 1 and the second cell 2 may be positioned not parallel to each other but oblique to each other. In instances where such a configuration is employed, the open area of the inlet 31 of the gas path 3 is larger than the open area of the outlet 32 of the gas path 3 in the electrochemical cell 110.

### (Fourth Embodiment not covered by the present invention)

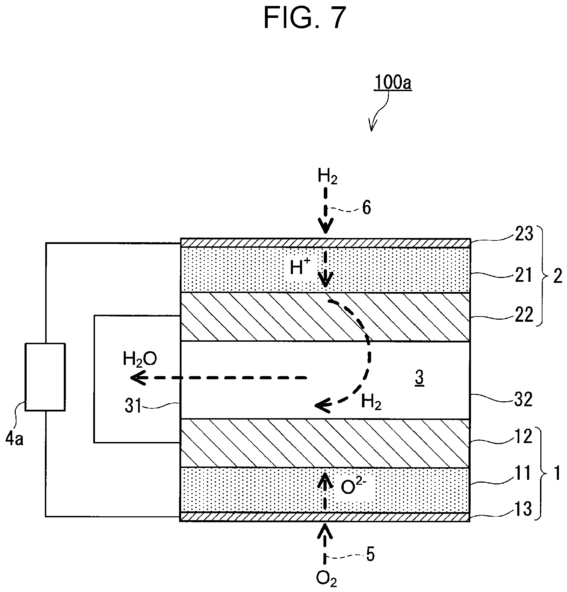

Fig. 7 illustrates a cross section of an electrochemical cell 100a. The electrochemical cell 100a has the same configuration as the configuration of the electrochemical cell 100, which has been described with reference to Fig. 1, except that an external load 4a replaces the power source 4. The configurations of a first cell 1 and a second cell 2 are as described above in the first embodiment.

The reaction that proceeds at each of the electrodes of the electrochemical cell 100a is a reaction in the reverse direction to that of the reaction that proceeds at each of the electrodes of the electrochemical cell 100 of the first embodiment. In the present embodiment, a power generation reaction is carried out in the first cell 1 by using oxygen supplied from the outside and hydrogen that has passed through the second cell 2. This enables the supply of electrical energy to the outside, which is different from the first embodiment not covered by the present invention in this regard.

Operation of the electrochemical cell 100a will be described in detail.

An operating temperature of the first cell 1 and the second cell 2 is, for example, greater than or equal to 500°C and less than or equal to 1000°C. Thus, the same operating temperature may be used in the present embodiment and the first embodiment.

First, hydrogen is supplied to a fourth electrode 23 of the second cell 2. At the fourth electrode 23, an oxidation reaction of the hydrogen occurs, which generates protons. Specifically, the hydrogen is oxidized and converted to protons at or near an interface between a second electrolyte layer 21 and the fourth electrode 23. The protons migrate through the second electrolyte layer 21 to reach a third electrode 22. At the third electrode 22, a reduction reaction of the protons occurs, which generates hydrogen. Specifically, the protons are reduced and converted to hydrogen at or near an interface between the second electrolyte layer 21 and the third electrode 22. The hydrogen generated at a surface of the second cell 2 diffuses through the gas path 3 to reach a surface of the first cell 1.

The first cell 1 generates power by using the hydrogen supplied to the first electrode 12 and the oxygen supplied to a second electrode 13. Specifically, a gas containing oxygen is supplied to the second electrode 13 of the first cell 1. A typical example of the gas containing oxygen is air. At the second electrode 13, a reduction reaction of the oxygen occurs, which generates oxide ions. The oxide ions migrate through the first electrolyte layer 11 to reach the first electrode 12. At the first electrode 12, an electrochemical reaction that generates water vapor and electrons from the oxide ions and hydrogen proceeds. The water vapor and unreacted hydrogen are directed to the outside of the electrochemical cell 100a through the gas path 3. The hydrogen may be combusted by using a burner or by catalytic combustion.

The reaction at each of the electrodes is as follows.
First electrode 12: 2H₂ + 2O²⁻ → 2H₂O + 4e⁻
Second electrode 13: O₂ + 4e⁻ → 2O²⁻
Third electrode 22: 2H⁺ + 2e⁻ → H₂
Fourth electrode 23: H₂ → 2H⁺ + 2e⁻

This enables pure hydrogen to be generated in the second cell 2 and supplied to the first cell 1 even in instances in which the gas to be supplied to the fourth electrode 23 of the second cell 2 contains not only hydrogen but also impurities, such as water vapor or carbon dioxide. As a result, the following effects, for instance, are produced in the first cell 1: improvement in power generation performance and inhibition of carbon deposition. The gas to be supplied to the second cell 2 may be, for example, a hydrogen-containing gas obtained by reforming a raw gas, such as methane, or a hydrogen-containing gas obtained by performing water vapor electrolysis.

The reaction that proceeds in the first cell 1 is an electrochemical reaction that generates water vapor and electrical energy from hydrogen and oxygen (i.e., a reaction in a fuel cell). The electrical energy may be supplied to the external load 4a, which is connected to the first cell 1. A part of the electrical energy is used as energy for the proton conduction that takes place in the second cell 2. The electrochemical cell 100a serves as a fuel cell and generates electrical energy.

This enables pure hydrogen to be generated in the second cell 2 and supplied to the first cell 1 even in instances in which the gas to be introduced into a third passage 5 contains not only hydrogen but also impurities, such as water vapor or carbon dioxide. As a result, the following effects, for instance, are produced in the first cell 1: improvement in power generation performance and inhibition of carbon deposition.

### Industrial Applicability

Electrochemical cells according to the present invention are suitable for a hydrogen generation system or a fuel cell system. The electrochemical cells according to the present invention may also be utilized in a hydrogen purification apparatus or an electrochemical hydrogen pump, such as a hydrogen compressor.

### Reference Signs List

1 First cell
2 Second cell
3 Gas path
4 Power source
5 Oxygen passage
6 Hydrogen passage
7 Insulator layer
8 Seal member
11 First electrolyte layer
12 First electrode
13 Second electrode
21 Second electrolyte layer
22 Third electrode
23 Fourth electrode
31 Inlet
32 Outlet
33 Porous layer
34 Support
41 First power source
42 Second power source
100, 102, 104, 106, 108, 110, 100a Electrochemical cell

## Claims

1. An electrochemical cell comprising:
a first cell (1) including a first electrolyte layer (11) containing an oxide ion conductor;
a second cell (2) including a second electrolyte layer (21) containing a proton conductor;
a gas path (3) provided between the first cell (1) and the second cell (2), wherein the first cell (1) and the second cell (2) face each other across the gas path (3),
the first cell (1) further includes a first electrode (12) and a second electrode (13),
in the first cell (1), the first electrolyte layer (11) is disposed between the first electrode (12) and the second electrode (13),
the second cell (2) further includes a third electrode (22) and a fourth electrode (23),
in the second cell (2), the second electrolyte layer (21) is disposed between the third electrode (22) and the fourth electrode (23),
the first electrode (12) and the third electrode (22) face each other,
hydrogen is generated at the first electrode (12),
oxygen is generated at the second electrode (13),
hydrogen is converted to protons at the third electrode (22), and
hydrogen is generated at the fourth electrode (23),
wherein the first cell (1) and the second cell (2) are electrically insulated in the gas path (3).

2. The electrochemical cell according to Claim 1, wherein the gas path (3) is a space between the first cell (1) and the second cell (2).

3. The electrochemical cell according to Claim 1, further comprising an insulating layer (7) disposed in the gas path (3).

4. The electrochemical cell according to Claim 1, wherein a downstream end of the gas path (3) is closed.

5. The electrochemical cell according to Claim 1 or 4, further comprising a porous layer (33) disposed between the first cell (1) and the second cell (2), wherein
at least a part of the gas path (3) is composed of the porous layer (33).

6. The electrochemical cell according to Claim 1 or 4, further comprising a support (34) disposed in the gas path (3) and the support (34) is in contact with the first cell (1) and the second cell (2).

7. The electrochemical cell according to any one of Claims 1 to 6, wherein a flow path cross-sectional area of an upstream part of the gas path (3) is larger than a flow path cross-sectional area of a downstream part of the gas path (3).

8. The electrochemical cell according to any one of Claims 1 to 7, further comprising a power source (4) that supplies power to the first cell (1) and the second cell (2).

9. The electrochemical cell according to any one of Claims 1 to 7, further comprising:
a first power source (41) that supplies power to the first cell (1); and
a second power source (42) that supplies power to the second cell (2).

10. The electrochemical cell according to any one of Claims 1 to 9, wherein the proton conductor includes at least one selected from the group consisting of BaZr₁₋ₓ₁M1ₓ₁O_{3-δ}, BaCe₁₋ₓ₂M2ₓ₂O_{3-δ}, and BaZr_{1-x3-y3}Ceₓ₃M3_{y3}O_{3-δ}, where
M1, M2, and M3 each include at least one selected from the group consisting of Pr, Nd, Pm, Sm, Eu, Gd, Tb, Dy, Ho, Er, Tm, Yb, Y, Sc, In, and Lu,
a value of x1 satisfies 0 < x1 < 1,
a value of x2 satisfies 0 < x2 < 1,
a value of x3 satisfies 0 < x3 < 1,
a value of y3 satisfies 0 < y3 < 1, and
a value of δ satisfies 0 < δ < 0.5.

11. The electrochemical cell according to Claim 10, wherein the proton conductor is made of BaZr₁₋ₓ₁M1ₓ₁O_{3-δ}.

12. The electrochemical cell according to Claim 1, wherein
hydrogen is converted to protons at the fourth electrode (23),
hydrogen is generated at the third electrode (22), and
the first cell (1) generates power by using hydrogen supplied to the first electrode (12) and oxygen supplied to the second electrode (13).

13. A method of generating hydrogen, the method comprising:
disposing a first cell (1) and a second cell (2) so as to face each other across a gas path (3), the first cell (1) including a first electrolyte layer (11) containing an oxide ion conductor, the second cell (2) including a second electrolyte layer (21) containing a proton conductor, the first cell (1) further includes a first electrode (12) and a second electrode (13), in the first cell (1), the first electrolyte layer (11) is disposed between the first electrode (12) and the second electrode (13), the second cell (2) further includes a third electrode (22) and a fourth electrode (23), in the second cell (2), the second electrolyte layer (21) is disposed between the third electrode (22) and the fourth electrode (23), the first electrode (12) and the third electrode (22) face each other;
generating hydrogen at the first electrode (12), and oxygen at the second electrode (13) by decomposing water vapor by using the first cell (1); and
separating the hydrogen from a mixture gas of the hydrogen generated in the first cell (1) and water vapor which has not been decomposed in the first cell (1), wherein hydrogen is converted to protons at the third electrode (22), and hydrogen is generated at the fourth electrode (23),
wherein the first cell (1) and the second cell (2) are electrically insulated in the gas path (3).

## Patentansprüche

1. Elektrochemische Zelle, die umfasst:
eine erste Zelle (1), die eine erste Elektrolytschicht (11) einschließt, die einen Oxidionenleiter enthält;
eine zweite Zelle (2), die eine zweite Elektrolytschicht (21) einschließt, die einen Protonenleiter enthält;
einen Gasweg (3), der sich zwischen der ersten Zelle (1) und der zweiten Zelle (2) befindet, wobei die erste Zelle (1) und die zweite Zelle (2) einander über den Gasweg (3) zugewandt sind,
die erste Zelle (1) des Weiteren eine erste Elektrode (12) sowie eine zweite Elektrode (13) einschließt,
in der ersten Zelle (1) die erste Elektrolytschicht (11) zwischen der ersten Elektrode (12) und der zweiten Elektrode (13) angeordnet ist,
die zweite Zelle (2) des Weiteren eine dritte Elektrode (22) sowie eine vierte Elektrode (23) einschließt,
in der zweiten Zelle (2) die zweite Elektrolytschicht (21) zwischen der dritten Elektrode (22) und der vierten Elektrode (23) angeordnet ist,
die erste Elektrode (12) und die dritte Elektrode (22) einander zugewandt sind,
Wasserstoff an der ersten Elektrode (12) erzeugt wird,
Sauerstoff an der zweiten Elektrode (13) erzeugt wird,
Wasserstoff an der dritten Elektrode (22) in Protonen umgewandelt wird und
Wasserstoff an der vierten Elektrode (23) erzeugt wird,
wobei die erste Zelle (1) und die zweite Zelle (2) auf dem Gasweg (3) elektrisch isoliert sind.

2. Elektrochemische Zelle nach Anspruch 1, wobei der Gasweg (3) ein Raum zwischen der ersten Zelle (1) und der zweiten Zelle (2) ist.

3. Elektrochemische Zelle nach Anspruch 1, die des Weiteren eine isolierende Schicht (7) umfasst, die auf dem Gasweg (3) angeordnet ist.

4. Elektrochemische Zelle nach Anspruch 1, wobei ein stromab liegendes Ende des Gasweges (3) geschlossen ist.

5. Elektrochemische Zelle nach Anspruch 1 oder 4, die des Weiteren eine poröse Schicht (33) umfasst, die zwischen der ersten Zelle (1) und der zweiten Zelle (2) angeordnet ist, wobei
wenigstens ein Teil des Gasweges (3) aus der porösen Schicht (33) besteht.

6. Elektrochemische Zelle nach Anspruch 1 oder 4, die des Weiteren einen Träger (34) umfasst, der auf dem Gasweg (3) angeordnet ist, wobei der Träger (34) in Kontakt mit der ersten Zelle (1) und der zweiten Zelle (2) ist.

7. Elektrochemische Zelle nach einem der Ansprüche 1 bis 6, wobei eine Strömungsweg-Querschnittsfläche eines stromauf liegenden Teils des Gasweges (3) größer ist als eine Strömungsweg-Querschnittsfläche eines stromab liegenden Teils des Gasweges (3).

8. Elektrochemische Zelle nach einem der Ansprüche 1 bis 7, die des Weiteren eine Stromquelle (4) umfasst, die der ersten Zelle (1) und der zweiten Zelle (2) Strom zuführt.

9. Elektrochemische Zelle nach einem der Ansprüche 1 bis 7, die des Weiteren umfasst:
eine erste Stromquelle (41), die der ersten Zelle (1) Strom zuführt; und
eine zweite Stromquelle (42), die der zweiten Zelle (2) Strom zuführt.

10. Elektrochemische Zelle nach einem der Ansprüche 1 bis 9, wobei der Protonenleiter wenigstens eine Verbindung umfasst, die aus der Gruppe ausgewählt wird, die aus BaZr₁₋ₓ₁M1ₓ₁O₃-_{δ}, BaCe₁₋ₓ₂M2_{X2}O₃-_{δ}, und BaZr_{1-x3-y3}Ceₓ₃M_{3y}O₃-_{δ} besteht, wobei
M1, M2, und M3 jeweils wenigstens ein Element enthalten, das aus der Gruppe ausgewählt wird, die aus Pr, Nd, Pm, Sm, Eu, Gd, Tb, Dy, Ho, Er, Tm, Yb, Y, Sc, In, sowie Lu besteht,
für einen Wert von x1 0 < x1 < 1 gilt,
für einen Wert von x2 0 < x2 < 1 gilt,
für einen Wert von x3 0 < x3 < 1 gilt,
für einen Wert von y3 0 < y3 < 1 gilt, und
für einen Wert von δ 0 < 5 < 0,5 gilt.

11. Elektrochemische Zelle nach Anspruch 10, wobei der Protonenleiter aus BaZr₁₋ₓ₁M1ₓ₁O₃-_{δ} besteht.

12. Elektrochemische Zelle nach Anspruch 1, wobei
Wasserstoff an der vierten Elektrode (23) in Protonen umgewandelt wird,
Wasserstoff an der dritten Elektrode (22) erzeugt wird, und
die erste Zelle (1) Strom unter Verwendung von der ersten Elektrode (12) zugeführtem Wasserstoff sowie der zweiten Elektrode (13) zugeführtem Sauerstoff erzeugt.

13. Verfahren zum Erzeugen von Wasserstoff, wobei das Verfahren umfasst:
Anordnen einer ersten Zelle (1) und einer zweiten Zelle (2), so dass sie einander über einen Gasweg (3) zugewandt sind, wobei die erste Zelle (1) eine erste Elektrolytschicht (11) einschließt, die einen Oxidionenleiter enthält, die zweite Zelle (2) eine zweite Elektrolytschicht (21) einschließt, die einen Protonenleiter enthält, die erste Zelle (1) des Weiteren eine erste Elektrode (12) sowie eine zweite Elektrode (13) einschließt, in der ersten Zelle (1) die erste Elektrolytschicht (11) zwischen der ersten Elektrode (12) und der zweiten Elektrode (13) angeordnet ist, die zweite Zelle (2) des Weiteren eine dritte Elektrode (22) sowie eine vierte Elektrode (23) einschließt, in der zweiten Zelle (2) die zweite Elektrolytschicht (21) zwischen der dritten Elektrode (22) und der vierten Elektrode (23) angeordnet ist, wobei die erste Elektrode (12) und die dritte Elektrode (22) einander zugewandt sind;
Erzeugen von Wasserstoff an der ersten Elektrode (12) und von Sauerstoff an der zweiten Elektrode (13) durch Aufspalten von Wasserdampf unter Einsatz der ersten Zelle (1); sowie
Abscheiden des Wasserstoffs aus einem Gasgemisch aus dem in der ersten Zelle (1) erzeugten Wasserstoff und Wasserdampf, der in der ersten Zelle (1) nicht aufgespalten worden ist, wobei Wasserstoff an der dritten Elektrode (22) in Protonen umgewandelt wird und Wasserstoff an der vierten Elektrode (23) erzeugt wird,
wobei die erste Zelle (1) und die zweite Zelle (2) auf dem Gasweg (3) elektrisch isoliert sind.

## Revendications

1. Cellule électrochimique comprenant :
une première cellule (1) comportant une couche d'un premier électrolyte (11) contenant un conducteur d'ions oxyde ;
une seconde cellule (2) comportant une couche d'un second électrolyte (21) contenant un conducteur de protons ;
un trajet de gaz (3) fourni entre la première cellule (1) et la seconde cellule (2), dans laquelle la première cellule (1) et la seconde cellule (2) se font face de part et d'autre du trajet de gaz (3),
la première cellule (1) comporte en outre une première électrode (12) et une deuxième électrode (13),
dans la première cellule (1), la couche de premier électrolyte (11) est disposée entre la première électrode (12) et la deuxième électrode (13),
la seconde cellule (2) comporte en outre une troisième électrode (22) et une quatrième électrode (23),
dans la seconde cellule (2), la couche de second électrolyte (21) est disposée entre la troisième électrode (22) et la quatrième électrode (23),
la première électrode (12) et la troisième électrode (13) se font face,
de l'hydrogène est produit au niveau de la première électrode (12),
de l'oxygène est produit au niveau de la deuxième électrode (13),
de l'hydrogène est converti en protons au niveau de la troisième électrode (22), et
de l'hydrogène est produit au niveau de la quatrième électrode (23),
dans laquelle la première cellule (1) et la seconde cellule(2) sont isolées électriquement dans le trajet de gaz (3).

2. Cellule électrochimique selon la revendication 1, dans laquelle le trajet de gaz (3) est un espace entre la première cellule (1) et la seconde cellule (2).

3. Cellule électrochimique selon la revendication 1, comprenant en outre une couche isolante (7) disposée dans le trajet de gaz (3).

4. Cellule électrochimique selon la revendication 1, dans laquelle une extrémité aval du trajet de gaz (3) est fermée.

5. Cellule électrochimique selon la revendication 1 ou 4, comprenant en outre une couche poreuse (33) disposée entre la première cellule (1) et la seconde cellule (2), dans laquelle
au moins une partie du trajet de gaz (3) est composée de la couche poreuse (33).

6. Cellule électrochimique selon la revendication 1 ou 4, comprenant en outre un support (34) disposé dans le trajet de gaz (3) et la support (34) est en contact avec la première cellule (1) et la seconde cellule (2).

7. Cellule électrochimique selon l'une quelconque des revendications 1 à 6, dans laquelle une aire de section transversale de trajet d'écoulement d'une partie amont du trajet de gaz (3) est supérieure à une aire de section transversale de trajet d'écoulement d'une partie aval du trajet de gaz (3).

8. Cellule électrochimique selon l'une quelconque des revendications 1 à 7, comprenant en outre une source d'alimentation électrique (4) qui fournit de l'électricité à la première cellule (1) et la seconde cellule (2).

9. Cellule électrochimique selon l'une quelconque des revendications 1 à 7, comprenant en outre :
une première source d'alimentation électrique (41) qui fournit de l'électricité à la première cellule (1) ; et
une seconde source d'alimentation électrique (42) qui fournit de l'électricité à la seconde cellule (2).

10. Cellule électrochimique selon l'une quelconque des revendications 1 à 9, dans laquelle le conducteur de protons comporte au moins un élément choisi dans le groupe constitué par BaZr₁₋ₓ₁M1ₓ₁O_{3-δ}, BaCe₁₋ₓ₂M2ₓ₂O_{3- δ} et BaZr_{1-x3-y3}Ceₓ₃M3_{y3}O_{3- δ}, où
M1, M2 et M3 comportent chacun au moins un élément choisi dans le groupe constitué par Pr, Nd, Pm, Sm, Eu, Gd, Tb, Dy, Ho, Er, Tm, Yb, Y, Sc, In et Lu,
une valeur de x1 satisfait à 0 < x1 < 1,
une valeur de x2 satisfait à 0 < x2 < 1,
une valeur de x3 satisfait à 0 < x3 < 1,
une valeur de y3 satisfait à 0 < y3 < 1, et
une valeur de δ satisfait à 0 < δ < 0,5.

11. Cellule électrochimique selon la revendication 10, dans laquelle le conducteur de protons est constitué de BaZr₁₋ₓ₁M1ₓ₁O_{3-δ}.

12. Cellule électrochimique selon la revendication 1, dans laquelle
de l'hydrogène est converti en protons au niveau de la quatrième électrode (23),
de l'hydrogène est produit au niveau de la troisième électrode (22), et
la première cellule (1) génère de l'électricité en utilisant de l'hydrogène fourni à la première électrode (12) et de l'oxygène fourni à la deuxième électrode (13).

13. Procédé de production d'hydrogène, le procédé comprenant :
la disposition d'une première cellule (1) et d'une seconde cellule (2) de façon à ce que l'une soit face à l'autre de part et d'autre d'un trajet de gaz (3), la première cellule (1) comportant une couche de premier électrolyte (11) contenant un conducteur d'ions oxyde, la seconde cellule (2) comportant une couche de second électrolyte (21) contenant un conducteur de protons, la première cellule (1) comporte en outre une première électrode (12) et une deuxième électrode (13), dans la première cellule (1), la couche de premier électrolyte (11) est disposée entre la première électrode (12) et la deuxième électrode (13), la seconde cellule (2) comporte en outre une troisième électrode (22) et une quatrième électrode (23), dans la seconde cellule (2), la couche de second électrolyte (21) est disposée entre la troisième électrode (22) et la quatrième électrode (23),la première électrode (12) et la deuxième électrode se font face ;
la production d'hydrogène au niveau de la première électrode (12), et d'oxygène au niveau de la deuxième électrode (13) par décomposition de vapeur d'eau à l'aide de la première cellule (1) ; et
la séparation de l'hydrogène à partir d'un gaz de mélange composé de l'hydrogène produit dans la première cellule (1) et de vapeur d'eau qui n'a pas été décomposée dans la première cellule (1), dans lequel de l'hydrogène est converti en protons au niveau de la troisième électrode (22), et de l'hydrogène est produit au niveau de la quatrième électrode (23),
dans lequel la première cellule (1) et la deuxième cellule (2) sont isolées électriquement dans le trajet de gaz (3).
